# EUROPEAN PATENT APPLICATION

(11) **EP 1 533 693 A1**
(43) Date of publication of application: **25.05.2005**
(21) Application number: 03748516.6
(22) Date of filing: 27.08.2003
(51) Int. Cl.: G06F 9/38

(54) **COMPUTER SYSTEM**

(30) Priority: 30.08.2002 JP 2002254010
(71) Applicant: Seki, Hajime, Matsuyama-shi, Ehime 790-0848 (JP)
(72) Inventor: Seki, Hajime, Matsuyama-shi, Ehime 790-0848 (JP)
(74) Representative: Schwan - Schwan - Schorer
(86) International application number: PCT/JP2003/010891
(87) International publication number: WO 2004/021172

(57) **Abstract**

The computer system presented comprises a data file having entries each designed to hold data, an advanced and a completed mapping file each having entries each designed to hold a data-file-entry address, a state-modification queue having entries each designed to hold substance of a modification made on the advanced mapping file, means for holding statuses of operations provided in respective correspondence with the entries of the state-modification queue, and a means for performing issued operations out of order. Making a modification on the advanced mapping file, entering the substance of this modification into the state-modification queue, and issuing operations are each to be done in one cycle. Each issued operation is to be executed out of order. And, if it is terminated normally, the corresponding part of the means for holding statuses of operations is to be altered accordingly. The system can attain high performance easily and utilize programs described in any machine language for traditional register-based/stack-based processors.

## Description

### FIELD OF THE INVENTION

The present invention relates to a computer system of a novel construction that can attain high performance by providing a high degree of instruction-level parallelism.

### DESCRIPTION OF THE PRIOR ART

So far, versatile computer systems that have ever been put to practical use can be roughly classified as stack machines or register-based machines. Stack machines are superior in smallness of program code size and in quickness of interruption handling and context switching, though they have difficulty in attaining high performance. On the other hand, register-based machines can relatively easily attain high performance, but, in many other aspects, they are inferior to stack machines.

There is no program compatibility between stack machines and register-based machines, and as mentioned above, neither are absolutely superior.

The object of the present invention is to materialize a computer system that can harmonize itself both with the instruction system of stack machines and with that of register-based machines, and that can attain high performance.

### SUMMARY OF THE INVENTION

The computer system according to the present invention is basically similar to superscalar architectures capable of out-of-order execution, though it adopts an instruction format of large bit length, in which substances of operations and substance of a state modification to be made on the virtual operand stack / logical registers are to be specified.

The computer system according to the present invention comprises a data file that has entries each designed to hold data, an advanced and a completed mapping file each of which has entries each designed to hold a data-file-entry address, a state-modification queue that has entries each designed to hold substance of a state modification on mapping file indicated in an instruction, means for holding statuses of operations provided in respective correspondence with the entries of the state-modification queue, and a means for performing issued operations out of order. Said means for performing issued operations out of order - though you can come up with various variants of different structures - is basically materialized by means of an operation window that is a buffer to hold substances of issued operations, functional units for executing operations, etc.

The computer system of the present invention is so structured as to, in issuing one instruction per cycle, make a modification on the advanced mapping file, enter the substance of this modification into the state-modification queue, and issue operations (enter their substances into the operation window). In the case of issuing an operation to generate result data, a data-file entry is newly allocated to hold the result data, and this makes the destination register. Besides, what makes each source register of operations being issued is either a data-file entry whose address is obtained by accessing the advanced mapping file, or a data-file entry that is being allocated as a destination register of an operation contained in the same instruction.

Each issued operation is to be executed out of order by one of the functional units. And, if it is terminated normally, the corresponding part of said means for holding statuses of operations is to be altered accordingly.

If each operation contained in the same instruction that produced the substance in the head entry of the state-modification queue is shown to be terminated normally by the corresponding means for holding statuses of operations, in accordance with the substance in the head entry of the state-modification queue, contents of the completed mapping file are to be modified so as to reproduce the modification that was made on the advanced mapping file in the course of issue of the instruction, and said head entry of the state-modification queue is to be dequeued.

The computer system of the present invention can operate in either of the two modes: the stack mode and the register mode. In the case of processing a program translated from machine language for stack-based processors in conformity to the instruction format for the computer system of the present invention, the system is to operate in the stack mode. On the other hand, in the case of processing a program translated from machine language for register-based RISC/CISC processors in conformity to the instruction format for the computer system of the present invention, the system is to operate in the register mode. It is easy to transform several instructions of a stack machine / register machine into an instruction of the computer system of the present invention, so the system can efficiently process a wide range of programs.

In the stack mode, each mapping file is to be used to hold contents of a stack. Such a state of the operand stack of a traditional stack machine as { ..., word3, word2, word1 } (the right end is the top of the stack) corresponds to a state of the computer system of the present invention in which, with a, b, c, ... representing contents held in mapping file in entry-address order, word1, word2, word3, ... are (to be) held in the data-file entries whose addresses are a, b, c, ..., respectively.

In the register mode, each mapping file is to be used as an equivalent of register-mapping table of a register-based superscalar processor.

The present invention is an improved version of the invention disclosed in an application grounded on the same object (International application No. PCT/JP01/07442). The main improvements are: (1) means for holding statuses of operations are provided in respective correspondence with the entries of the state-modification queue, and (2) in the stack mode, each mapping file is to hold stack elements from the top downward in entry-address order.

### BRIEF DESCRIPTION OF THE DRAWINGS

Fig. 1 is a block diagram showing the basic structure of a preferred computer system according to the present invention.
Fig. 2 is a conceptual drawing of the instruction format for a preferred computer system according to the present invention.
Fig. 3 shows the relation among the advanced mapping file, the completed mapping file, and later-described two bottom pointers in the stack mode.
Fig. 4 illustrates the structure of an entry of the data file.
Fig. 5 illustrates the structure of an entry of the later-described operation queue.
Fig. 6 illustrates the structure of an entry of the state-modification queue.
Fig. 7 illustrates the inner structure of the free list.
Fig. 8 - 14 each show contents of the advanced mapping file, the completed mapping file, the state-modification queue, the operation queue, the data file, and the free list, at one of seven points in the course of an example action in the stack mode.
Fig. 15 - 21 each show contents of the advanced mapping file, the completed mapping file, the state-modification queue, the operation queue, the data file, and the free list, at one of seven points in the course of an example action in the register mode.

### PREFERRED EMBODIMENTS OF THE INVENTION

In the following, a preferred computer system according to the present invention is described.

### (1) Basic Structure

To begin with, the basic structure of the computer system of this embodiment is described.

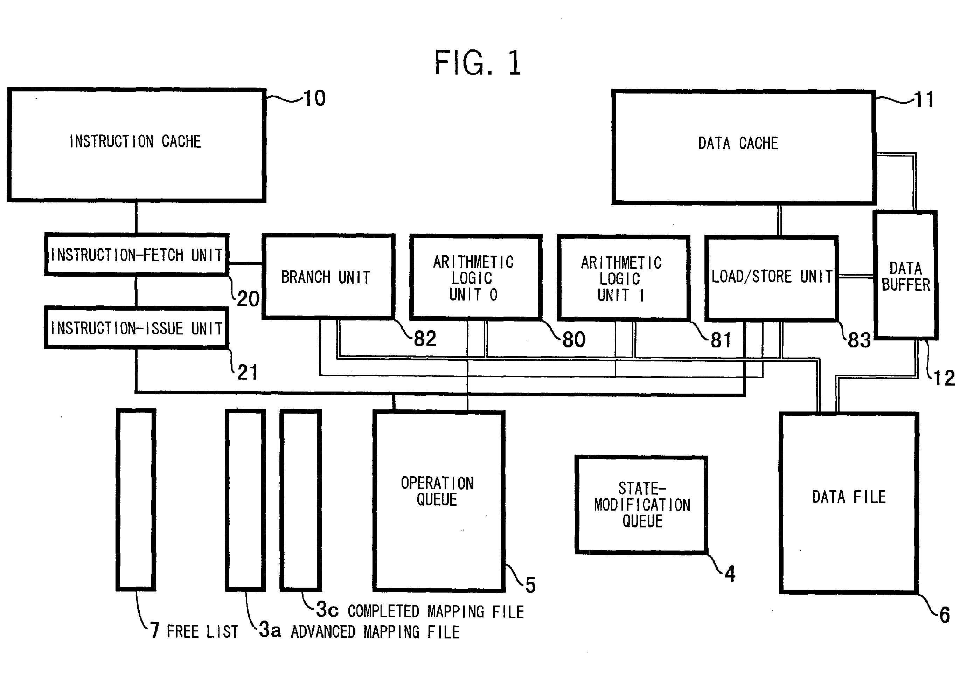

Fig. 1 is a block diagram of the computer system. Shown in Fig. 1 are an instruction cache 10, a data cache 11, a data buffer 12, an instruction-fetch unit 20, an instruction-issue unit 21, an advanced mapping file 3a, a completed mapping file 3c, a state-modification queue 4, an operation queue 5, a data file 6, a free list 7, arithmetic logic units 80 and 81, a branch unit 82, and a load/store unit 83.

Means for holding statuses of operations that should be provided in respective correspondence with the entries of the state-modification queue in the computer system of the present invention are, in this embodiment, materialized by means of four operation-status fields described later.

The computer system of the present invention needs to have an operation window, which is a buffer to hold substances of issued operations. There are basically two ways to implement the operation window: centralized type and distributed type. The computer system of this embodiment is supposed to have an operation queue of centralized type.

The computer system of the present invention can operate in either of the two modes: the stack mode and the register mode. In the case of processing a program translated from machine language for stack-based processors in conformity to the instruction format for the computer system of the present invention, the system is to operate in the stack mode. On the other hand, in the case of processing a program translated from machine language for register-based RISC/CISC processors in conformity to the instruction format for the computer system of the present invention, the system is to operate in the register mode.

Each mapping file of the computer system of the present invention has entries each designed to be able to hold a data-file-entry address, and is to function in the same way as a register-mapping table of a register-based superscalar processor capable of out-of-order execution in the register mode. In the present invention, the mapping files are to function equivalently in the stack mode as well.

### (2) Instruction Format

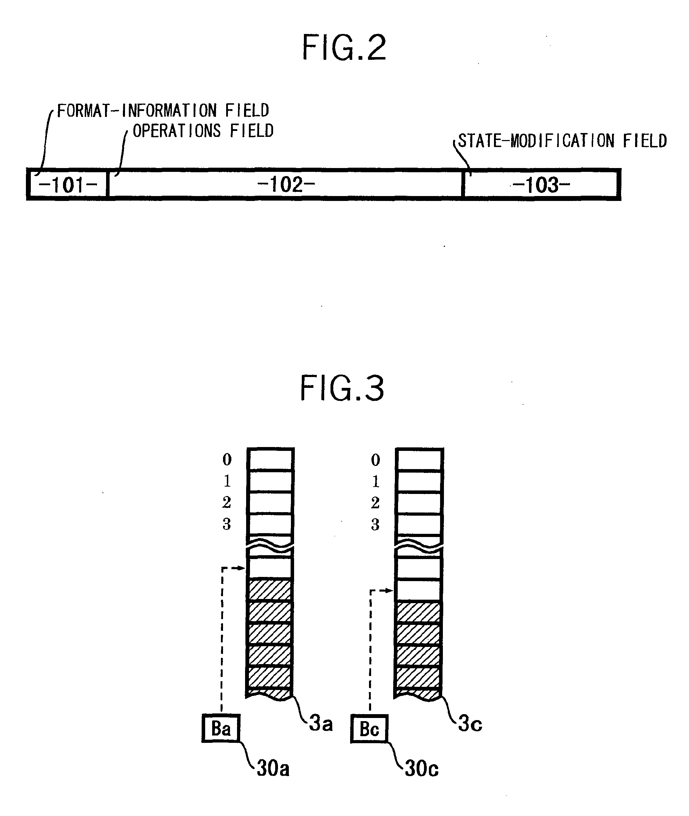

Fig. 2 is a conceptual drawing of the instruction format for the computer system of this embodiment. Both for the stack mode and for the register mode, the format of each instruction basically consists of a format-information field 101, an operations field 102, and a state-modification field 103.

Specified in the format-information field (FI field) are the length of the instruction, the number of operations the instruction contains, and the like.

Specified in the operations field (Op field) are substances of operations, e.g. arithmetic logic operations, branches, loads, stores, and the like. In this embodiment, each operation is expressed in the form similar to the instruction format for RISC processors. In this embodiment, each instruction is supposed to contain up to 4 operations (such instructions as to contain a branch operation do not necessarily contain 4 operations).

Specified in the state-modification field (SM field) is substance of a modification on mapping file, i.e. state modification on the virtual operand stack (in the stack mode) / the virtual logical registers (in the register mode). As described later, the stack mode differs from the register mode in format inside the state-modification field.

In the case of issuing an operation to generate result data, a data-file entry is to be allocated to hold the result data. The logical position of this entry is to be indicated by the content of the SM field.

The computer system of this embodiment is supposed to be able to issue one instruction in the above-mentioned format per cycle.

### (2-1) Instruction Format for the Stack Mode

In the following, the instruction format for the stack mode is explained.

Each data-file entry of the computer system of this embodiment is supposed to be able to hold data that is to be held by an entry of the operand stack of the virtual stack machine. In this embodiment, with s0, s1, s2, ... representing contents of mapping-file entries of address 0, 1, 2, ... respectively, the substance of the operand stack of the virtual stack machine is supposed to be configured by lining up data that are to be held in data-file entries whose respective addresses are s0, s1, s2, ... in order (s0 corresponds to the top of the stack).

For example, a program for the stack machine to compute A*X+B/X, and store the result into memory as variable Y can be written as follows:

| | |
|---|---|
| LOAD <4> ; | push the value of local variable <4> onto the operand stack |
| DUP | ; duplicate the top word on the stack, and push the duplicate onto the stack |
| LOAD <1> ; | push the value of local variable <1> onto the operand stack |
| MUL | ; pop two words from the stack, multiply them, and push the result onto the stack |
| SWAP | ; swap top two words on the operand stack |
| LOAD <2> ; | push the value of local variable <2> onto the operand stack |
| SWAP | ; swap top two words on the operand stack |
| DIV ; | pop two words from the stack, divide by the top word, and push the result onto the stack |
| ADD; | pop two words from the stack, add them, and push the result onto the stack |
| STORE <5> : | store the top word on the stack into local variable <5> |

where the storage areas of variables A, B, X and Y are local variables <1>, <2>, <4> and <5>, respectively.

Now, let's explain how to transform the above program into instructions for the stack mode of the computer system of this embodiment.

Partitioning the above program into two groups of instructions, and expressing the operation and the modification to be made on mapping file separately for each instruction, you can transform the above program as follows:

| | | |
|---|---|---|
| Instruction-1a | load f1, <4> | ; +1: f1 |
| Instruction_1b | add f2, f1, 0 | ; +2: f1, f2 |
| Instruction_1c | load f3, <1> | ; +3: f1, f2, f3 |
| Instruction_1d | mul f4, f2, f3 | ; +2: f1, f4 |
| Instruction_1e | (swap) | ; +2: f4, f1 |
| Instruction_2a | load f1, <2> | ; +1: f1 |
| Instruction_2b | (swap) | ; +1: f1, s0 |
| Instruction_2c | div f2, f1, s0 ; | 0: f2 |
| Instruction_2d | add f3, s1, f2 | ; -1: f3 |
| Instruction_2e | store <5>, f3 | ; -2: |

where addresses of the data-file entries to be newly allocated to hold result data are represented by f1, f2, ... in order for each group of instructions. In this embodiment, f1, f2, ... correspond to contents that are to be taken out of the free list in each cycle.

Besides, as for each modification to be made on mapping file, the number of entries by which the stack is to grow and stuff to write in the vicinity of the top of the stack (the right end corresponds to the top of the stack) are indicated.

Instruction_1a implies to load the value of local variable <4>, write it into the data-file entry corresponding to f1, grow the stack whose elements are held by mapping file by one entry, and make the new top-of-the-stack entry to hold the address of the data-file entry corresponding to f1. Instruction_1b implies to add 0 to the value in the data-file entry corresponding to f1, write the result data into the data-file entry corresponding to f2, grow the stack whose elements are held by mapping file by one entry, and make the new top-of-the-stack entry to hold the address of the data-file entry corresponding to f2, though the modification to be made on mapping file is expressed with that to be made by Instruction_1a involved. The other instructions imply likewise.

For each of the two groups of instructions, putting instructions together, and expressing operations and modifications to be made on mapping file separately, you can transform the above program as follows:

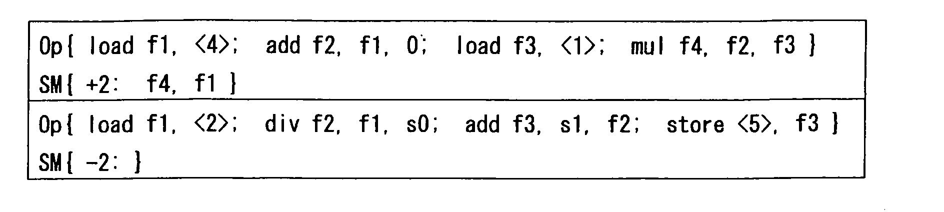

These are the contents of the Op and SM fields of the two instructions in the case where the above program is so transformed as to conform to the instruction format for the stack mode of the computer system of this embodiment. As above, as for the instruction format for the stack mode, the amount of stack growth and a series of signs standing for post-modification stuff in the vicinity of the top of the stack are to be specified in the SM field.

### (2-2) Instruction Format for the Register Mode

Next, let's explain the instruction format for the register mode.

Each data-file entry of the computer system of this embodiment is supposed to be able to hold data that is to be held by a register of the virtual register machine. In this embodiment, with r0, r1, r2, ... representing contents of mapping-file entries of address 0, 1, 2, ... respectively, data-file entries whose addresses are r0, r1, r2, ... are supposed to respectively hold data of register R0, R1, R2, ... of the virtual register machine.

For example, a program for the register machine to load data of variables A, B and X from memory into registers, compute (A*X+B/X)*2, and store the result into memory as variable Y can be written as follows:

| | |
|---|---|
| LOAD R1, 100[R0] ; | load the value at address {the value in R0 +100} into register R1 |
| LOAD R4, 400[R0] ; | load the value at address {the value in R0 +400} into register R4 |
| MUL R5, R1, R4 ; | R5 = R1*R4 |
| LOAD R2, 200[R0] ; | load the value at address {the value in R0 +200} into register R2 |
| DIV R4, R2, R4 ; | R4 = R2/R4 |
| ADD R5, R5. R4 ; | R5 = R5+R4 |
| MUL R5, R5, 2 ; | R5 = R5*2 |
| STORE 500[R0], R5 ; | store the value in register R5 at address {the value in R0 +500} |

where the addresses of variables A, B, X and Y in memory are 100, 200, 400 and 500 each added to the value in R0, respectively.

Now, let's explain how to transform the above program into instructions for the register mode of the computer system of this embodiment.

Partitioning the above program into groups each consisting of 4 instructions, and expressing the operation and the modification to be made on mapping file separately for each instruction, you can transform the above program as follows:

| | | |
|---|---|---|
| Instruction_1a | load f1, 100[r0] | ; 1:f1 |
| Instruction_1b | load f2, 400[r0] | ; 4:f2 |
| Instruction_1c | mul f3, f1, f2 | ; 5:f3 |
| Instruction_1d | load f4, 200[r0] | ; 2:f4 |
| Instruction_2a | div f1, r2, r4 | ; 4:f1 |
| Instruction_2b | add f2, r5, f1 | ; 5:f2 |
| Instruction_2c | mul f3, f2, 2 | ; 5:f3 |
| Instruction_2d | store 500[r0], f3 | |

where, in the same way as for the stack mode, addresses of the data-file entries to be newly allocated to hold result data are represented by f1, f2, ... in order for each group of instructions.

Instruction_1a implies to load the value at address {100 added to the value in the data-file entry corresponding to r0}, write it into the data-file entry corresponding to f1, and replace the content of the mapping-file entry of address 1 with the address of the data-file entry corresponding to f1. Instruction_1c implies to multiply the value in the data-file entry corresponding to f1 by the value in that corresponding to f2, write the result data into the data-file entry corresponding to f3, and replace the content of the mapping-file entry of address 5 with the address of the data-file entry corresponding to f3. The other instructions imply likewise.

For each of the two groups of instructions, putting four instructions together, and expressing operations and modifications to be made on mapping file separately, you can transform the above program as follows:

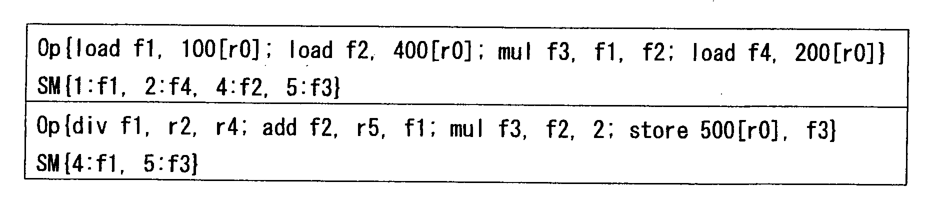

These are the contents of the Op and SM fields of the two instructions in the case where the above program is so transformed as to conform to the instruction format for the register mode of the computer system of this embodiment. In transforming into the second instruction, though there were two alterations on the mapping-file entry of address 5, only the last one is kept in the SM field. As above, as for the instruction format for the register mode, combinations of address of a mapping-file entry on which an alteration is to be made and sign standing for stuff to enter are to be listed in the SM field.

Each instruction based on the VLIW (very long instruction word) architecture can be so transformed as to conform to the instruction format for the register mode of the computer system of the present invention without difficulty as well.

### (3) Stack Mode

### (3-1) Functions and Structures Required for the Action in the Stack Mode

Here, the function and structure of each component of the computer system of this embodiment used for the action in the stack mode are described. They, with some exceptions, are the functions and structures needed in the register mode as well.
(A) Instruction-Fetch unit
   The instruction-fetch unit is furnished with a program counter, which is not shown in the figures, and so structured as to fetch instructions from the instruction cache and deliver them to the instruction-issue unit. It also carries out prediction and execution of branches.
(B) Instruction-Issue Unit
   The instruction-issue unit is so structured as to, in issuing each instruction delivered from the instruction-fetch unit, generate various signals to modify the advanced mapping file, the data file, etc., and enter substances into the operation queue and the state-modification queue.
(C) Mapping files
   Each mapping file has entries each designed to be able to hold a data-file-entry address.
   In the stack mode of the computer system of this embodiment, a mapping file and the data file can virtually configure uppermost part of the stack to be provided for a stack machine. Namely, in the stack mode, each mapping file is to be used to hold contents of a stack. Such a state of the operand stack of a traditional stack machine as { ..., word3, word2, word1} (the right end is the top of the stack) corresponds to a state of the computer system of the present invention in which, with a, b, c, ... representing contents of mapping-file entries of address 0, 1, 2, ... respectively, word1, word2, word3, ... are (to be) held in the data-file entries whose addresses are a, b, c, ..., respectively. When the operand stack grows so long, the remaining part is to be stored in the data buffer, and further, in the data cache.
   The computer system of the present invention is furnished with two mapping files of the same shape: an advanced mapping file (AMF) and a completed mapping file (CMF).
   In the computer system of the present invention, each time an instruction is issued, a modification according with the instruction is made on the AMF. Namely, the AMF is to reflect substances of all the issued instructions.
   On the other hand, the CMF is to reflect substances of all the instructions completed in program-sequential order. The computer system of the present invention is capable of out-of-order execution of operations contained in the issued instructions. And, for securing precise handling of exceptions, the CMF enables the system to compose the state grounded on all the instructions completed in order.
   Each mapping file is furnished with a register named a bottom pointer to indicate the bottom entry holding a stack element. In the initialized state or in the case where the mapping file is vacant, the value of the bottom pointer is determined to be -1.
   Fig. 3 shows the relation among two sets of mapping files and bottom pointers in the computer system of this embodiment. Two mapping files, the AMF 3a and the CMF 3c, have the same number of entries. And, on each mapping file, the entries are tagged with address 0, 1, 2, ... from the top downward. Each of the AMF/CMF entries that are not shaded with oblique lines is supposed to hold a data-file-entry address as a stack element. As shown in Fig. 3, the bottom pointers provided for the AMF and the CMF are respectively named Ba and Bc.
(D) Data file (DF)
   The data file (DF) has entries each designed to be able to hold a word of data.
   In this embodiment, the DF entries are supposed to be tagged with address P00, P01, P02, ....

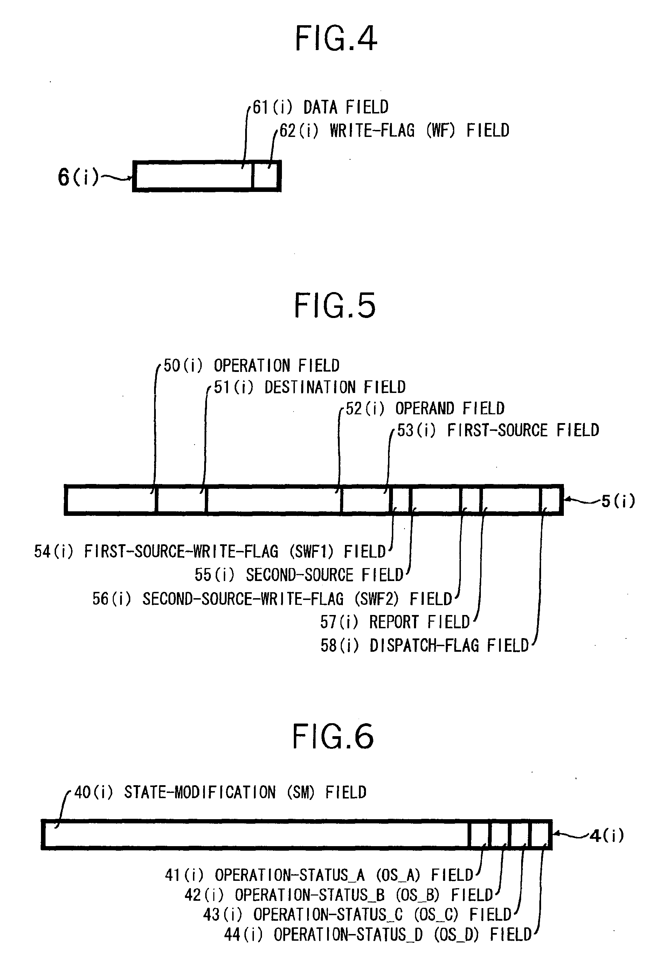

   Fig. 4 illustrates the structure of entry 6(i) of the DF 6 in the computer system of this embodiment. Here, "i" stands for entry address. Each entry 6(i) of the DF 6 comprises data field 61(i) and write-flag (WF) field 62(i).
   As for the hardware implementation, the DF is practically made of register files that respectively correspond to the fields listed above.
   The data field of each DF entry is designed to be able to hold a word of data.
   In each DF entry, the WF field is supposed to hold "1" in the case where data is already entered in the data field, and hold "0" otherwise.
(E) Operation queue (OQ)
   The operation queue (OQ) is a buffer, which is constructed as a circular FIFO queue, to hold substances of operations contained in instructions that have been already issued but not yet completed.
   Fig. 5 illustrates the structure of entry 5(i) of the OQ 5 in the computer system of this embodiment. Here, "i" stands for entry address. Each entry 5(i) of the OQ 5 comprises operation field 50(i), destination field 51(i), operand field 52(i), first-source field 53(i), first-source -write -flag (SWF1) field 54(i), second-source field 55(i), second-source-write-flag (SWF2) field 56(i), report field 57(i), and dispatch-flag field 58(i).
   The operation field of each OQ entry is designed to hold an operation code.
   In each OQ entry, in the case of an operation to generate result data, the destination field is to hold the address of the DF entry allocated to hold that result data.
   In each OQ entry, in the case of an operation that specifies an operand value in the Op field of the instruction, the operand field is to hold that operand value.
   Each of the first- and second-source fields of each OQ entry is designed to be able to hold the address of the DF entry allocated to hold source data.
   In each OQ entry, the first- and second-SWF fields respectively correspond to the first- and second-source fields. The first-/second-SWF field is supposed to hold "1" in the case where data is already entered in the DF entry indicated in the first-/second-source field, and hold "0" otherwise.
   The report field of each OQ entry is designed to hold the address of the state-modification-queue entry that corresponds to the instruction containing the operation and an identifier (A, B, C or D).
   In each OQ entry, the dispatch-flag field is supposed to hold "0" in the case where the operation has not yet been dispatched, and hold "1" otherwise.
(F) State-Modification Queue (SMQ)
   The state-modification queue (SMQ) is a buffer, which is constructed as a circular FIFO queue, to hold substances of modifications on mapping file indicated in instructions that have been already issued but not yet completed. In this embodiment, each entry of the SMQ is to correspond to one instruction.
   Fig. 6 illustrates the structure of entry 4(i) of the SMQ 4 in the computer system of this embodiment. Here, "i" stands for entry address. Each entry 4(i) of the SMQ 4 comprises state-modification (SM) field 40(i), operation-status_ A (OS_A) field 41(i), operation-status_B (OS_B) field 42(i), operation-status_C (OS_C) field 43(i) and operation-status_D (OS_D) field 44(i).
   As for the hardware implementation, the SMQ is practically made of register files that respectively correspond to the fields listed above.
   The SM field of each SMQ entry is designed to hold substance of a modification on mapping file indicated in the SM field of the corresponding instruction.
   In each SMQ entry, the OS_A, OS_B, OS_C and OS_D fields are each designed to hold information about the state of the respectively corresponding operation. In this embodiment, for the sake of simplicity, "1" is supposed to be held in the case where the corresponding operation does not exist or has been terminated normally, and "0" is supposed to be held otherwise.
(G) Data Buffer
   The data buffer is a circular buffer that has entries each designed to be able to hold a word of data.
(H) Functional Units
   As shown in Fig. 1, the computer system of this embodiment is furnished with four functional units: arithmetic logic unit 0 and 1, a branch unit and a load/store unit (LSU). These have the pipeline processing capability, and are to operate in parallel independently of each other.
   In the stack mode, the LSU is so structured as to be able to access the data buffer and the data cache.
   In the stack mode of the computer system of this embodiment, while uppermost part of the stack to be provided for a stack machine is to be virtually configured by means of a mapping file and the data file (DF), lower and even lower part are to be stored in the data buffer and in the data cache, respectively. As the LSU is supposed to be able to quickly access the data buffer, the larger proportion of variables to access the data buffer retains, the more efficiently the computation can proceed. And, by letting the data buffer retain an appropriate number of words of data, later-described spill/fill operations between the DF, the data buffer and the data cache can be streamlined.
   The LSU is furnished with a register to hold a pointer to first local variable, the vars register, which is not shown in the figures. In the computer system of this embodiment, though the storage area of a local variable is either in the data buffer or in the data cache, the vars register is to hold the corresponding address in the data cache. Namely, even if all or part of the local variables are practically held in the data buffer, assuming that all the local variables were spilt into the data cache, you can associate each local variable with an address in the data cache. In executing a load/store operation, the LSU may conduct an address calculation referring to the value of the vars register, judge whether the storage area of the object local variable is in the data buffer or in the data cache, and access the storage area.
   The LSU is so structured as not only to execute load/store operations specified in the program, but also to automatically perform spills/fills between the data buffer and the bottom of the partial stack virtually configured by means of the AMF/CMF and the DF in order to evade overflows/underflows.
   A word of data can be spilt from the DF into the data buffer, when the following two conditions are satisfied (otherwise, the spill is to be deferred): (a) an identical content is held in the entry indicated by the bottom pointer (Ba/Bc) both in the AMF and in the CMF; and (b) there is no OQ entry in the queue whose source field holds the same DF-entry address as said identical content. The system could be so structured that condition (b) is always satisfied, by introducing certain restrictions on cases in which an address of DF entry used as a source register of an operation contained in an instruction is to remain held in mapping file. If such restrictions are not introduced into the instruction system, the computer system needs to be so structured as to have the following function: comparing the content of each source field on the OQ with the same DF-entry address as said identical content, and checking up on condition (b). In the case where the above two conditions are satisfied, a word of data held in the DF entry indicated by the content of the AMF/CMF entry indicated by bottom pointer Ba/Bc can be spilt into the data buffer. At this juncture, the values of Ba and Bc are each to be decreased by one, and the address of said DF entry is to be registered on the FL.
   Conversely, in filling the DF with a word of data from the data buffer, the system is to take a word of data to fill with out of the data buffer, assign to it a free DF entry, write the word into the data field of this entry, whose WCF-field content is set to be "1", increase each of the values of Ba and Bc by one, and write the address of the assigned DF entry into the entry indicated by the increased-by-one value of the bottom pointer both on the AMF and on the CMF.
   Besides, between the data buffer and the data cache, spills and fills are to be performed properly in accordance with vacancies in the data buffer.
   In the above, on the assumption that no modification grounded on issue/completion of instructions is made on the AMF/CMF, spill/fill operations between the DF and the data buffer are described. The system, however, can be easily so structured that issue and completion of instructions and spill/fill operations are synthesized to be conducted simultaneously.
   Besides, the computer system of the present invention can be so structured that a plurality of words of data can be spilt/filled at once between the DF and the data buffer and between the data buffer and the data cache.
(I) Free List (FL)

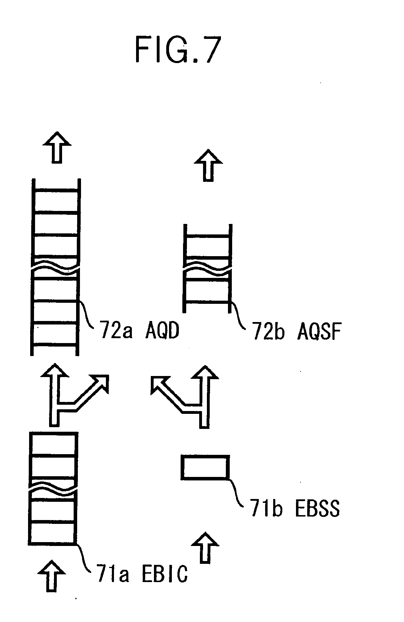

The free list (FL) is to hold addresses of free, namely, unallocated DF entries. In this embodiment, as shown in Fig. 7, the FL comprises the entry buffer for instruction completion (EBIC) 71a, the entry buffer for stack spill (EBSS) 71b, the allocation queue for destinations (AQD) 72a, and the allocation queue for stack fill (AQSF) 72b, each of which can hold a respectively reasonable number of DF-entry addresses. And, the AQD and the AQSF are each constructed as a circular FIFO queue.

In the initialized state, the address of each DF entry is held in either the AQD or the AQSF. In the case where a DF entry needs to be newly allocated, a free-DF-entry address is to be taken out of the FL ― from the AQD if the DF entry is to be allocated to hold result data of an operation in the course of issue of an instruction, and from the AQSF for filling the stacks whose elements are held in the mapping files. Conversely, the address of each deallocated DF entry is to be registered on the FL ― into the EBIC if deallocated in compliance with completion of an instruction, and into the EBSS if deallocated in the course of a spill from the stacks whose elements are held in the mapping files. Right after entered into the EBIC/EBSS, each DF-entry address is to be moved to either the ADQ or the AQSF according to the numbers of their holding DF-entry addresses.

### (3-2) Action in the Stack Mode

Next, the action in the stack mode of the computer system of this embodiment is described.

The computer system of this embodiment basically processes instructions through four stages: [1] instruction fetch, [2] instruction issue, [3] operations execution, and [4] instruction completion. In the following, the action in each stage is described.
[1] Instruction Fetch
   In this stage, the instruction-fetch unit fetches an instruction from the instruction cache, and determines the address of the instruction to fetch next. Ordinarily, it is from the next address to fetch next. But, in the case where the fetched instruction contains either an unconditional branch operation or a conditional branch operation with a prediction of taking a branch, the case where a branch prediction turns out to have missed, or the case where an exception occurs, the address of the instruction to fetch next is changed.
[2] Instruction Issue
   In this stage, issuing operations according with the Op-field contents of the issued instruction (entering substances of the operations into the operation queue (OQ)), making a modification on the advanced mapping file (AMF) and its bottom pointer Ba according with the SM-field contents, and entering the substance of this modification into the state-modification queue (SMQ) are to be done. At this juncture, s0, s1, s2, ... in the instruction ― which respectively correspond to the top, 2nd, 3rd, ... of the stack ― are respectively replaced by pre-alteration contents of AMF entries of address 0, 1, 2, ..., and f1, f2, ... are respectively replaced by DF-entry addresses that are taken out of the free list (FL) in order.
   As for the modification on the AMF and Ba, the following acts are to be conducted. First, in the same manner as above, signs shown in the SM field of the instruction are respectively replaced by appropriate DF-entry addresses, which are entered into the respectively corresponding AMF entries. Here, the AMF entry of address 0 is to correspond to the top of the stack, namely, the sign shown at the right end in the SM field of the instruction, and as for the rest, in entry-address order, AMF entries are to correspond to stack elements. As for the part where no alteration is explicitly expressed in the SM field of the instruction, contents of AMF entries are shifted by the amount of stack growth. Namely, with g representing the amount of stack growth, in compliance with issue of the instruction, the content in the AMF entry of address (i) is moved into the AMF entry of address (i+g). Besides, the amount of stack growth is added to the value of bottom pointer Ba.
   In each OQ entry into which substance of an operation contained in the instruction is being entered, the address of the SMQ entry being enqueued based on the same instruction and an identifier (A, B, C or D - mechanically assigned in order) are entered into the report field, and "0" is entered into the dispatch-flag field.
   Into the WF field of each of the DF entries newly allocated in the course of issue of the instruction (in respective correspondence with f1, f2, f3, ...), "0" is entered.
   In the case of a store operation, its substance is not only entered into the OQ, but also delivered to the LSU.
   On the OQ, for the present, "0" is entered into each SWF field corresponding to a source field into which a DF-entry address is being entered; as for each entering of a DF-entry address replacing any of s0, s1, s2, ... into a source field, in the next cycle, the WF-field content of the DF entry of that address will be read out, and if being "1", it will be entered into the corresponding SWF field on the OQ.
   In the SMQ entry that is being enqueued in compliance with issue of the instruction, into each operation-status field that has a corresponding operation, "0" is entered, which stands for "unexecuted", and into each of the rest, "1" is entered.
[3] Operations Execution
   Each of unexecuted operations held in the OQ is to be dispatched to appropriate one of the functional units and be executed after becoming executable. Therefore, operations are executed out of order.
   In regard to each OQ entry holding an operation, if it is confirmed that each required source data has already been entered into the corresponding DF entry by the content of the corresponding SWF field, the contents of the OQ entry, together with the source data obtained by accessing the DF, are transmitted to appropriate one of the functional units so that the held operation would be executed. At this juncture, dispatch-flag-field content of the OQ entry is changed to be "1".
   As for each operation to generate result data, such as load and arithmetic/logic operations, if result data is obtained normally, it is entered into the data field of the destination DF entry, whose WF-field content is changed to be "1". Besides, on the OQ, each source-field content is compared with the address of the destination DF entry, and each SWF-field content corresponding to a matched source field is changed to be "1".
   As for each OQ entry holding substance of a store operation, the same substance was delivered to the LSU in the instruction-issue stage. In this embodiment, each source data required for address calculation that was not arranged in the instruction-issue stage is supposed to be transmitted to the LSU right after the OQ senses it arriving in the DF.
   If an operation is terminated normally, content of the operation-status field of the SMQ entry indicated by the report-field content is changed to be "1".
   As for store operations, the LSU conducts address calculations out of order in the operations-execution stage, though it is to carry out stores in the instruction-completion stage so that precise handling of exceptions may be secured. Therefore, in the case of a store operation, if the store data and the store address are both arranged, content of the operation-status field of the SMQ entry corresponding to the store operation is changed to be "1".
   In the case where an exception occurs in executing an operation, this piece of information is to be written into the operation-status field of the SMQ entry corresponding to the operation, and is to be communicated to the instruction-fetch unit.
[4] Instruction Completion
   Instructions are to be completed in program-sequential order.
   If every operation-status-field content is/becomes "1" in the head entry of the SMQ, the corresponding instruction gets ready to be completed. To complete the instruction, the system makes a modification on the CMF and Bc according with the substance in the head entry of the SMQ, and dequeues this head entry. Here, the modification that was made on the AMF in the course of issue of the instruction is being reproduced on the CMF.
   Besides, in accordance with completion of the instruction, each address of DF entry to be deallocated is to be registered on the FL. In the stack mode, the set of addresses of DF entries to be deallocated consists of the following two groups: the one(s), hold of which is being lost on the CMF in the course of the modification in completing the instruction, and the one(s), each of which is a destination-field content in the OQ entries that have held the operations contained in the instruction, and each of which is not being entered into the CMF.
   In the case of completing an instruction that contains a store operation / store operations, the system requests the LSU to carry out the store / stores. Thus, data are to be stored in program-sequential order for sure.
   The above is the overall action in the stack mode of the computer system of this embodiment.

### (3-3) Example Action in the Stack Mode

Next, an example action is described. Now, let's consider processing, with the computer system of this embodiment, the above-mentioned program to compute Y=A*X+B/X, which consists of the following two instructions.

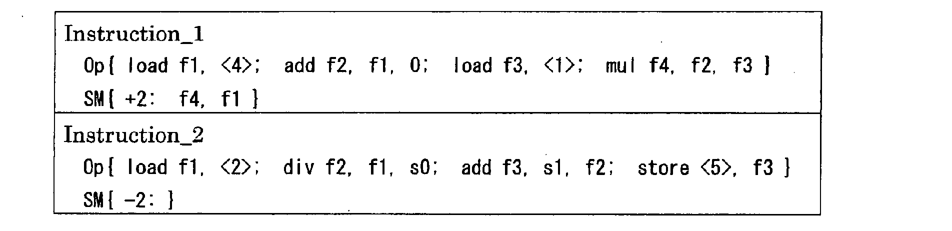

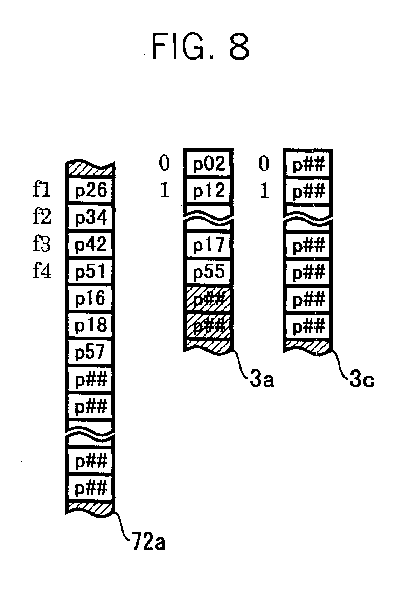

Fig. 8 - 14 show states of the computer system of this embodiment in the course of processing of the above program in order of time. With reference to these figures, detailed action is described below. In Fig. 8 - 14, the structure of each entry of the DF 6 / OQ 5 / SMQ 4 is the same as in Fig. 4 / Fig. 5 / Fig. 6. Places whose contents are not held as substantial ― such as mapping-file entries below the entry indicated by the bottom pointer and dequeued entries of each component to configure a FIFO queue ― are shaded with oblique lines. As for each place in which p## is entered, though a DF-entry address is actually written, you need not pay attention in the explanation of this example action. Besides, in this example action, it is supposed, for the sake of simplicity, that no spill/fill operation between the DF and the data buffer is to be performed.

Let us suppose that, at the outset, contents of the allocation queue for destinations (AQD) 72a, which is a component of the FL, and contents of the AMF 3a are such as those shown in Fig. 8. Here, as for the AQD 72a, which is constructed as a circular FIFO queue, it is shown that the four entries from the head one of the queue downward respectively correspond to f1, f2, f3 and f4 for the instruction to be issued next. On the AMF 3a / CMF 3c, the entries are supposed to be tagged with address 0, 1, 2, ... from the top downward, and to correspond to s0, s1, s2, ..., respectively.

Let us suppose that Instruction_1 is to be issued when the computer system is in such a state as shown in Fig. 8.

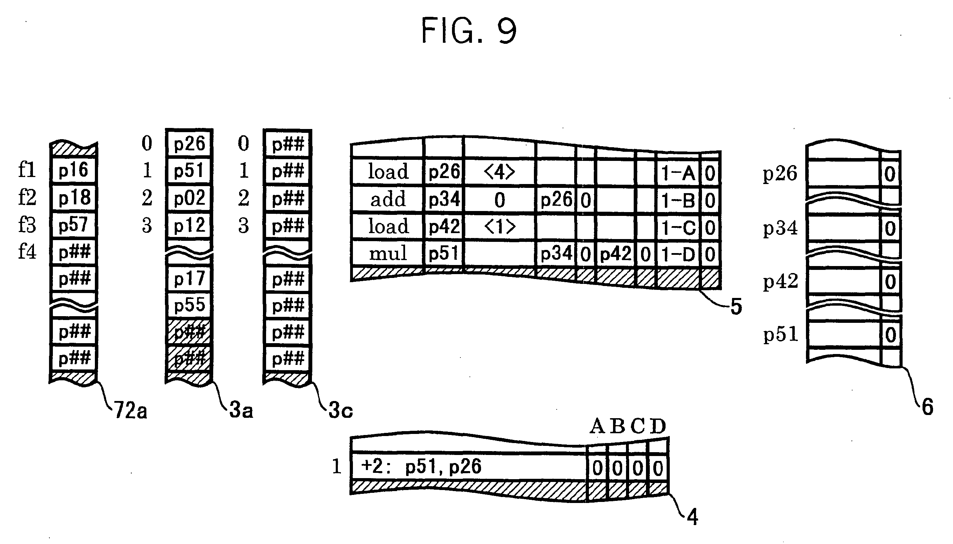

Substances of operations according with the contents of the Op field of instruction_1 are entered into the OQ, a modification according with the contents of the SM field is made on the AMF and Ba, and the substance of this modification is entered into the SMQ. At this juncture, f1, f2, f3 and f4 in the instruction are respectively replaced by p26, p34, p42 and p51, which are taken out of the free list in order. As for the modification on the AMF, p26 and p51, replacing f1 and f4, are respectively entered into the entries of address 0 and 1, and for the part below, contents of the AMF entries are shifted down by the amount of stack growth (2). (The contents of the AMF entries of address 0, 1, ... shown in Fig. 8 are moved into the AMF entries of address 2, 3, ..., respectively.) Into the report field of each of the four OQ entries whose contents are shown in Fig. 9, "1" ― the address of the entry of the SMQ that is being enqueued also in issuing Instruction_1 ― and an identifier (A, B, C or D, assigned in order) are entered. Besides, into the dispatch-flag field of each of these four OQ entries, "0" is entered.

Into the WF field of each of the newly allocated DF entries, whose respective addresses are p26, p34, p42 and p51 ― respectively corresponding to f1, f2, f3 and f4 ―, "0" is entered.

Into each operation-status field of the SMQ entry that is being enqueued, "0" is entered since there is a corresponding operation.

Thus, the computer system in such a state as shown in Fig. 8 gets to be in such a state as shown in Fig. 9.

In the next cycle, following Instruction_1, Instruction_2 is to be issued.

In the same way as in the case of Instruction_1, substances of operations according with the contents of the Op field of instruction_2 are entered into the OQ, a modification according with the contents of the SM field is made on the AMF and Ba, and the substance of this modification is entered into the SMQ. At this juncture, s0 and s1 in the instruction are respectively replaced by p26 and p51 ― the pre-alteration (Fig. 9) contents of the AMF entries of address 0 and 1 ―, and f1, f2 and f3 are respectively replaced by p 16, p 18 and p57, which are taken out of the free list in order. As only a negative growth of the stack (-2) is indicated in the SM field, contents of the AMF entries are shifted by this amount. (The contents of the AMF entries of address 2, 3, ... shown in Fig. 9 are moved into the AMF entries of address 0, 1, ..., respectively.)

Into the WF field of each of the newly allocated DF entries, whose respective addresses are p16, p18 and p57 ― respectively corresponding to f1, f2 and f3 ―, "0" is entered.

And moreover, as Instruction_2 contains a store operation, its substance is not only entered into the OQ, but also delivered to the LSU.

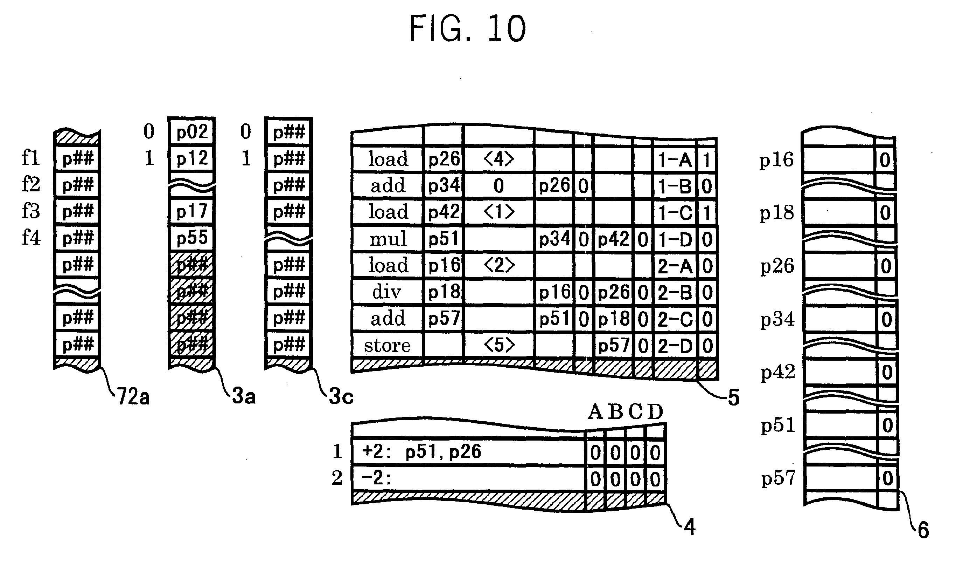

Thus, the computer system gets to be in such a state as shown in Fig. 10.

Each of unexecuted operations held in the OQ is to be dispatched to appropriate one of the functional units and be executed after becoming executable.

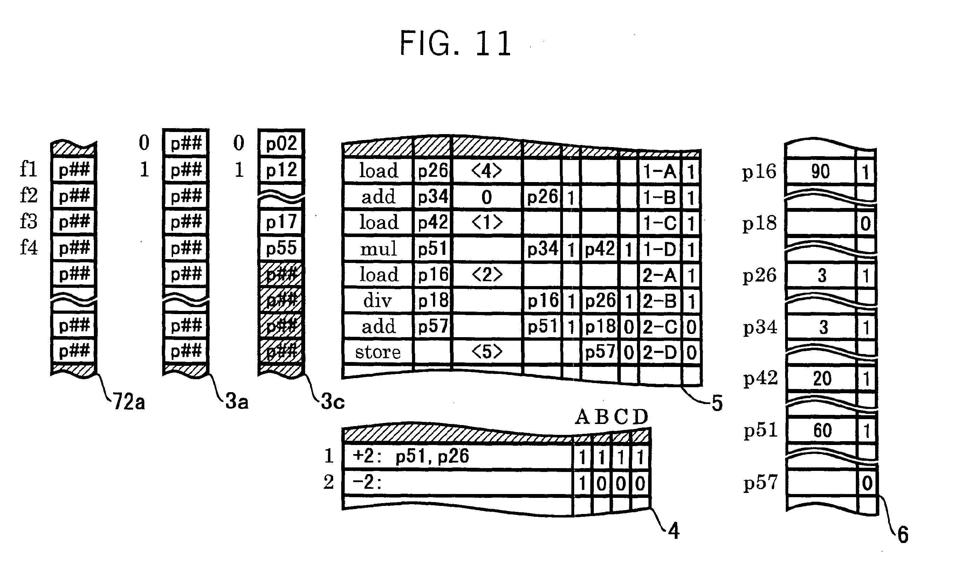

Fig. 11 shows the state that the computer system is in ― after some cycles have gone by ― when all the instructions issued before Instruction_1 have been completed and all the four operations contained in Instruction_1 have been terminated normally. Every operation-status-field content is "1" in the SMQ entry of address 1, which corresponds to Instruction_1. And, contents of the CMF and Bc at this point are the same as contents of the AMF and Ba right before Instruction_1 was issued (Fig. 8). (If spill/fill operations between the DF and the data buffer were performed, the value of Ba in issuing the instruction is not necessarily equal to the value of Bc in completing the instruction.) The system in this state is to complete Instruction_1 in the following manner.

Since the SMQ entry of address 1 is at the head of the queue at this point as shown in Fig. 11, a modification according with its substance is made on the CMF and Bc. Namely, 2 is added to the value of Bc, and p26 and p51 are respectively entered into the CMF entries of address 0 and 1, and for the part below, contents of the CMF entries are shifted down by the amount of stack growth (2). And moreover, the said head entry of the SMQ is dequeued.

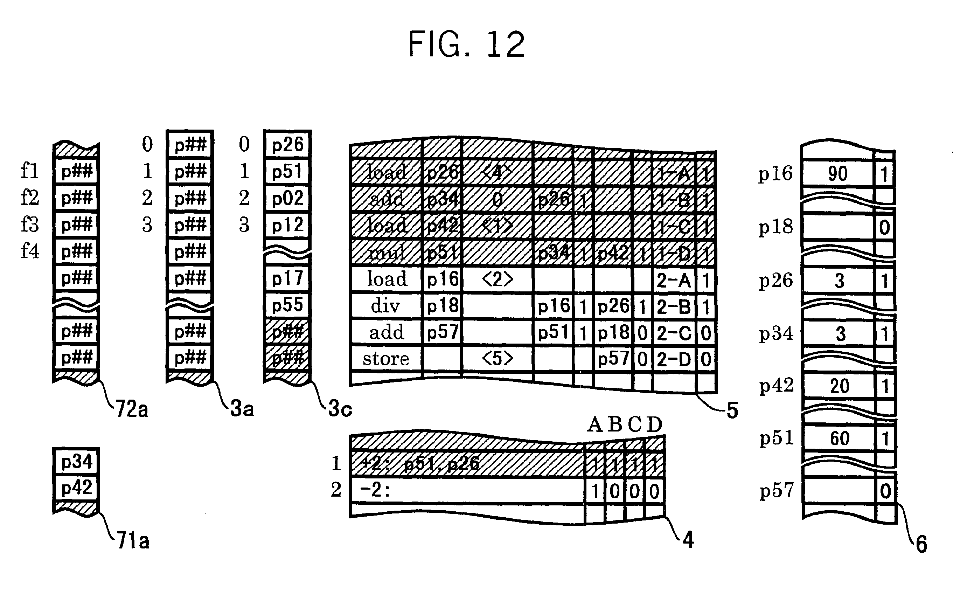

Besides, in accordance with completion of Instruction_1, each address of DF entry to be deallocated is registered on the FL. In this case, p34 and p42 ― each of which is a destination-field content in the OQ entries that have held the operations contained in Instruction_1, and each of which is not being entered into the CMF ― are entered into the entry buffer for instruction completion (EBIC) 71a, which is a component of the FL. (In this case, there is no DF-entry address, hold of which is being lost on the CMF in the course of the modification in completing the instruction.) Thus, the computer system gets to be in such a state as shown in Fig. 12.

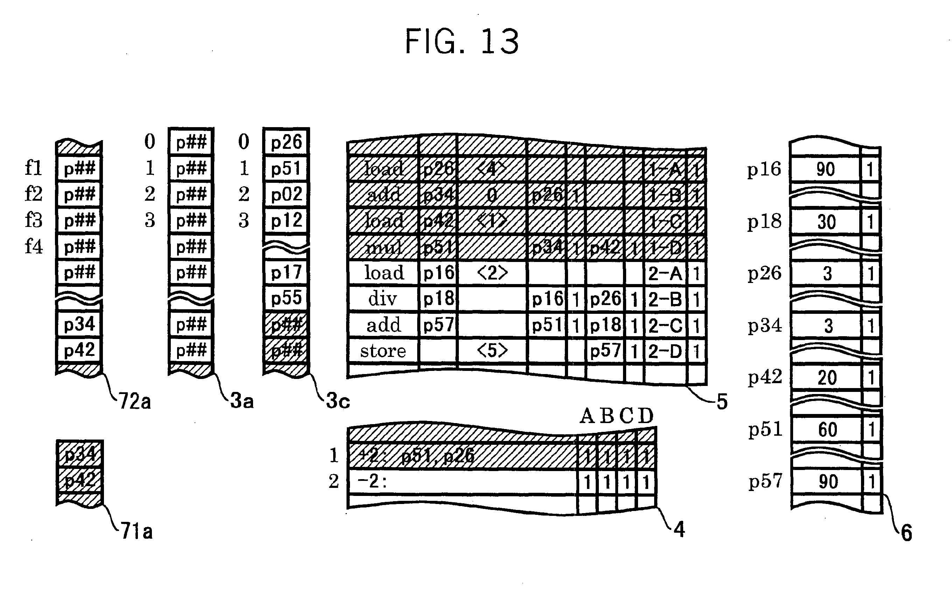

Fig. 13 shows the state that the computer system is in ― after some further cycles have gone by ― when three operations contained in Instruction_2 have been terminated normally and the store data and the store address have been both arranged for the last (store) operation. Into the AQD, p34 and p42, which were entered into the EBIC, have been moved.

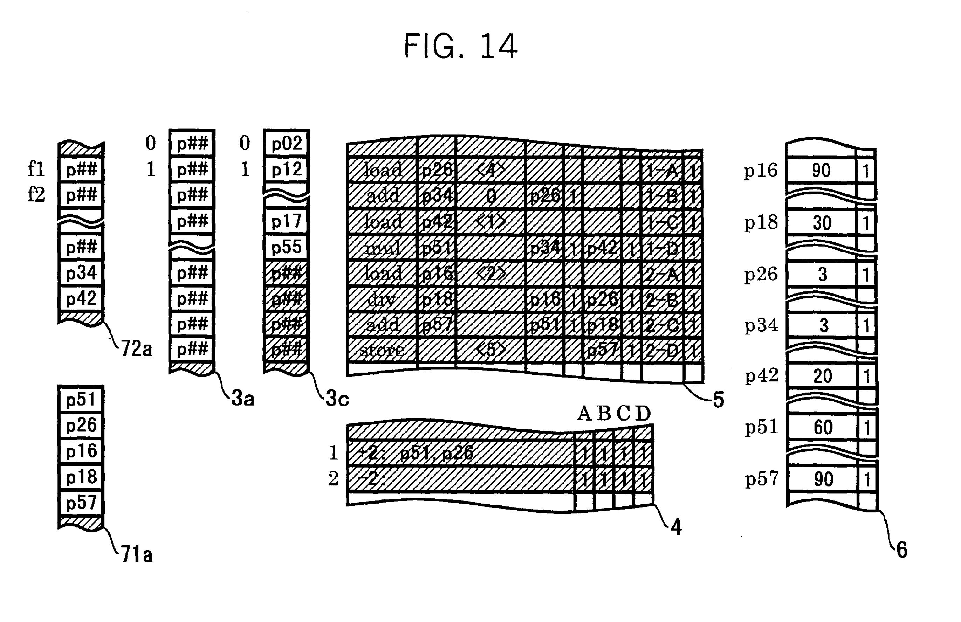

The system at the point of Fig. 13 is to complete Instruction_2 in a cycle in the same manner as in the case of Instruction_1. In this case, Instruction_2 contains a store operation, so the system requests the LSU to carry out the store. Besides, in accordance with completion of the instruction, each address of DF entry to be deallocated is registered on the FL. In this case, p51 and p26 ― hold of which is being lost on the CMF in the course of the modification in completing the instruction -, and p16, p18 and p57 ― each of which is a destination-field content in the OQ entries that have held the operations contained in Instruction_2, and each of which is not being entered into the CMF ― are entered into the EBIC. Thus, the computer system gets to be in such a state as shown in Fig. 14.

Now, computation of Y=A*X+B/X is concluded in the computer system of this embodiment.

### (4) Register Mode

### (4-1) Functions and Structures Required for the Action in the Register Mode

The functions and structures described in section (3-1) are, with some exceptions, needed in the register mode as well. Here, differences from the case of the stack mode are to be described.

First, in the register mode, each mapping file is to be used as an equivalent of register-mapping table of register-based superscalar processors.

Therefore, in principle, the bottom pointer of each mapping file, the data buffer, the spill/fill function of the load/store unit (LSU), the entry buffer for stack spill (EBSS) and the allocation queue for stack fill (AQSF) in the free list (FL), etc. are not necessary.

### (4-2) Action in the Register Mode

Next, the action in the register mode of the computer system of this embodiment is described.

In the register mode, in the same manner as in the stack mode, the computer system of this embodiment basically processes instructions through four stages: [1] instruction fetch, [2] instruction issue,

[3] operations execution, and [4] instruction completion. In the following, the action in each stage is described.
[1] Instruction Fetch
   In this stage, the instruction-fetch unit fetches an instruction from the instruction cache, and determines the address of the instruction to fetch next.
[2] Instruction Issue
   In this stage, issuing operations according with the Op-field contents of the issued instruction (entering substances of the operations into the operation queue (OQ)), making a modification on the advanced mapping file (AMF) according with the SM-field contents, and entering the substance of this modification into the state-modification queue (SMQ) are to be done. At this juncture, r0, r1, r2, ... in the instruction are respectively replaced by pre-alteration contents of AMF entries of address 0, 1, 2, ..., and f1, f2, ... are respectively replaced by DF-entry addresses that are taken out of the free list (FL) in order.
   As for the modification on the AMF, the following acts are to be conducted. For each combination of AMF-entry address and sign shown in the SM field of the instruction, the sign is replaced by the appropriate DF-entry address in the same manner as above, and it is entered into the AMF entry whose address is indicated in the combination.
   In each OQ entry into which substance of an operation contained in the instruction is being entered, the address of the SMQ entry being enqueued based on the same instruction and an identifier (A, B, C or D - mechanically assigned in order) are entered into the report field, and "0" is entered into the dispatch-flag field.
   Into the WF field of each of the DF entries newly allocated in the course of issue of the instruction (in respective correspondence with f1, f2, f3, ...), "0" is entered.
   In the case of a store operation, its substance is not only entered into the OQ, but also delivered to the LSU.
   On the OQ, for the present, "0" is entered into each SWF field corresponding to a source field into which a DF-entry address is being entered; as for each entering of a DF-entry address replacing any of r0, r1, r2, ... into a source field, in the next cycle, the WF-field content of the DF entry of that address will be read out, and if being "1", it will be entered into the corresponding SWF field on the OQ.
   In the SMQ entry that is being enqueued in compliance with issue of the instruction, into each operation-status field that has a corresponding operation, "0" is entered, which stands for "unexecuted", and into each of the rest, "1" is entered.
[3] Operations Execution
   In the same manner as in the stack mode, each of unexecuted operations held in the OQ is to be dispatched to appropriate one of the functional units and be executed after becoming executable.
[4] Instruction Completion

Instructions are to be completed in program-sequential order in the same manner as in the stack mode except for the following.

To begin with, it is in conformity with the format inside the SM field of instruction - namely, entry format for the state-modification queue (SMQ) - for the register mode that the modification that was made on the AMF in the course of issue of the instruction is reproduced on the CMF.

Besides, in accordance with completion of the instruction, each address of DF entry to be deallocated is to be registered on the FL. In the register mode, the set of addresses of DF entries to be deallocated consists of the following two groups: the one(s) each of which is pre-alteration CMF-entry content being altered in the course of completion of the instruction, and the one(s), each of which is a destination-field content

in the OQ entries that have held the operations contained in the instruction, and each of which is not being entered into the CMF.

The above is the overall action in the register mode of the computer system of this embodiment.

### (4-3) Example Action in the Register Mode

Next, an example action is described. Now, let's consider processing, with the computer system of this embodiment, the above-mentioned program to compute Y=(A*X+B/X)*2, which consists of the following two instructions.

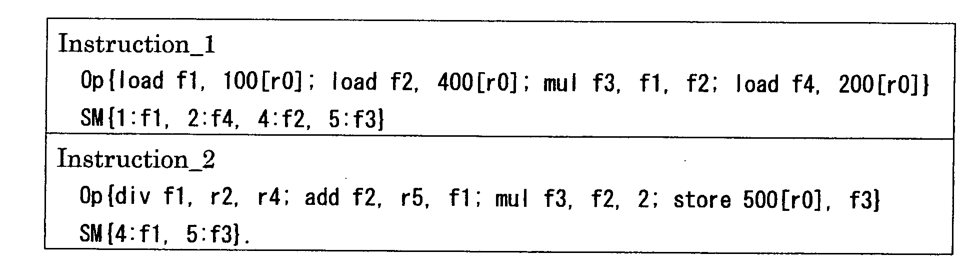

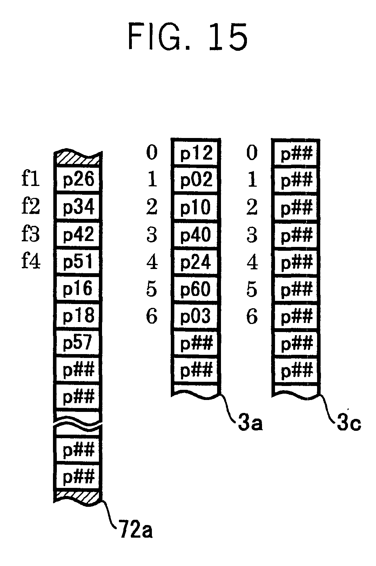

Fig. 15 - 21 show states of the computer system of this embodiment in the course of processing of the above program in order of time. With reference to these figures, detailed action is described below. In Fig. 15 - 21, the structure of each entry of the DF 6 / OQ 5 / SMQ 4 is the same as in Fig. 4 / Fig. 5 / Fig. 6. Places whose contents are not held as substantial ― such as dequeued entries of each component to configure a FIFO queue ― are shaded with oblique lines. As for each place in which p## is entered, though a DF-entry address is actually written, you need not pay attention in the explanation of this example action.

Let us suppose that, at the outset, contents of the allocation queue for destinations (AQD) 72a, which is a component of the FL, and contents of the AMF 3a are such as those shown in Fig. 15. Here, as for the AQD 72a, which is constructed as a circular FIFO queue, it is shown that the four entries from the head one of the queue downward respectively correspond to f1, f2, f3 and f4 for the instruction to be issued next. On the AMF 3a / CMF 3c, the entries are supposed to be tagged with address 0, 1, 2, ... from the top downward, and to correspond to r0, r1, r2, ..., respectively.

Let us suppose that Instruction_1 is to be issued when the computer system is in such a state as shown in Fig. 15.

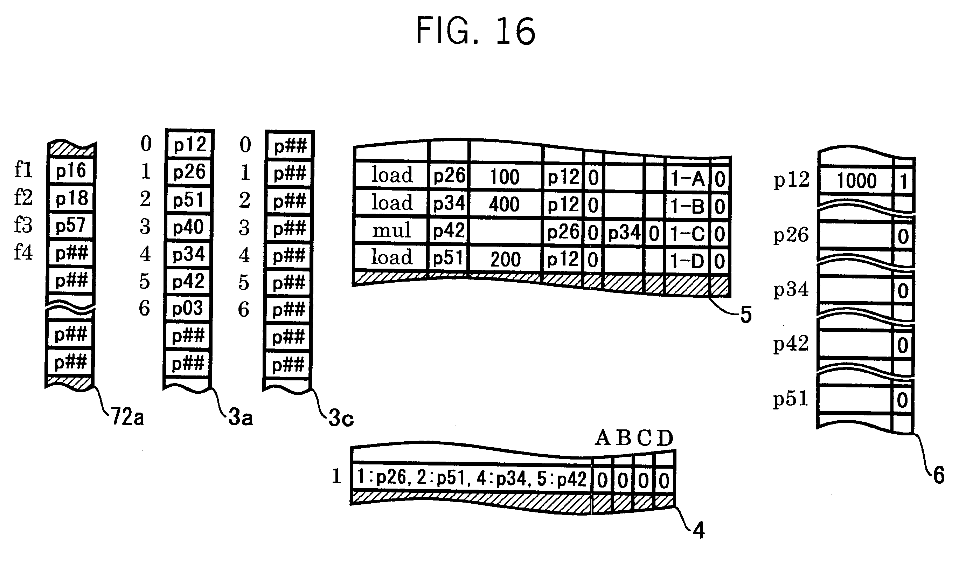

Substances of operations according with the contents of the Op field of instruction_1 are entered into the OQ, a modification according with the contents of the SM field is made on the AMF, and the substance of this modification is entered into the SMQ. At this juncture, each r0 in the instruction is replaced by p12 ― the pre-alteration (Fig. 15) content of the AMF entry of address 0 ―, and f1, f2, f3 and f4 are respectively replaced by p26, p34, p42 and p51, which are taken out of the free list in order. As for the modification on the AMF, p26, p51, p34 and p42, replacing f1, f4, f2 and f3, are respectively entered into the entries of address 1, 2, 4 and 5. Into the report field of each of the four OQ entries whose contents are shown in Fig. 16, "1" ― the address of the entry of the SMQ that is being enqueued also in issuing Instruction_1 ― and an identifier (A, B, C or D, assigned in order) are entered. Besides, into the dispatch-flag field of each of these four OQ entries, "0" is entered.

Into the WF field of each of the newly allocated DF entries, whose respective addresses are p26, p34, p42 and p51 ― respectively corresponding to f1, f2, f3 and f4 ―, "0" is entered. (It is supposed that, in the DF entry of address p12 ― corresponding to r0 ―, the WF-field content is "1" and data "1000" is already written.)

Into each operation-status field of the SMQ entry that is being enqueued, "0" is entered since there is a corresponding operation.

Thus, the computer system in such a state as shown in Fig. 15 gets to be in such a state as shown in Fig. 16.

In the next cycle, following Instruction_1, Instruction_2 is to be issued.

In the same way as in the case of Instruction_1, substances of operations according with the contents of the Op field of instruction_2 are entered into the OQ, a modification according with the contents of the SM field is made on the AMF, and the substance of this modification is entered into the SMQ.

Into the WF field of each of the newly allocated DF entries, whose respective addresses are p16, p18 and p57 ― respectively corresponding to f1, f2 and f3 ―, "0" is entered.

And moreover, as Instruction_2 contains a store operation, its substance is not only entered into the OQ, but also delivered to the LSU.

Besides, since p12, which replaced r0, was entered into source fields on the OQ in the course of issue of Instruction_1 in the preceding cycle, the WF-field content of the DF entry of that address is read out, and as being "1", on the OQ, it is entered into SWF fields corresponding to source fields holding p 12.

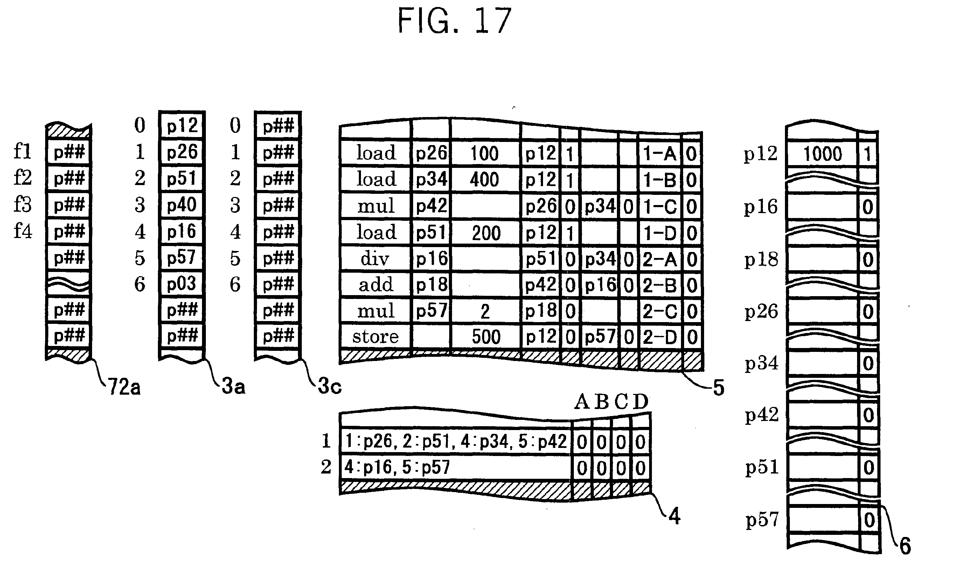

Thus, the computer system gets to be in such a state as shown in Fig. 17.

Each of unexecuted operations held in the OQ is to be dispatched to appropriate one of the functional units and be executed after becoming executable.

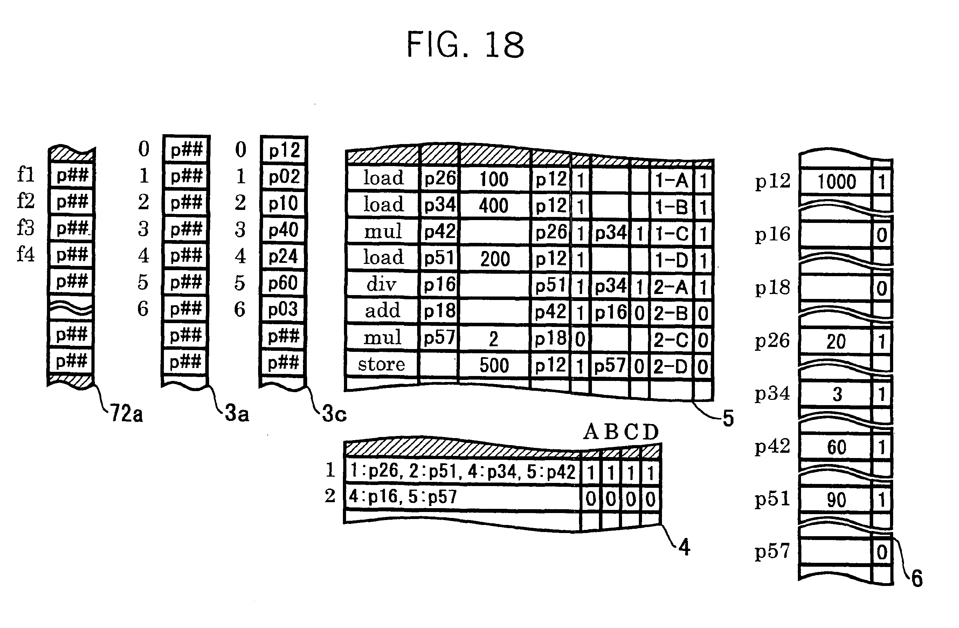

Fig. 18 shows the state that the computer system is in ― after some cycles have gone by ― when all the instructions issued before Instruction_1 have been completed and all the four operations contained in Instruction_1 have been terminated normally. Every operation-status-field content is "1" in the SMQ entry of address 1, which corresponds to Instruction_1. And, contents of the CMF at this point are the same as contents of the AMF right before Instruction_1 was issued (Fig. 15). The system in this state is to complete Instruction_1 in the following manner.

Since the SMQ entry of address 1 is at the head of the queue at this point as shown in Fig. 18, a modification according with its substance is made on the CMF. Namely, p26, p51, p34 and p42 are respectively entered into the CMF entries of address 1, 2, 4 and 5. And moreover, the said head entry of the SMQ is dequeued.

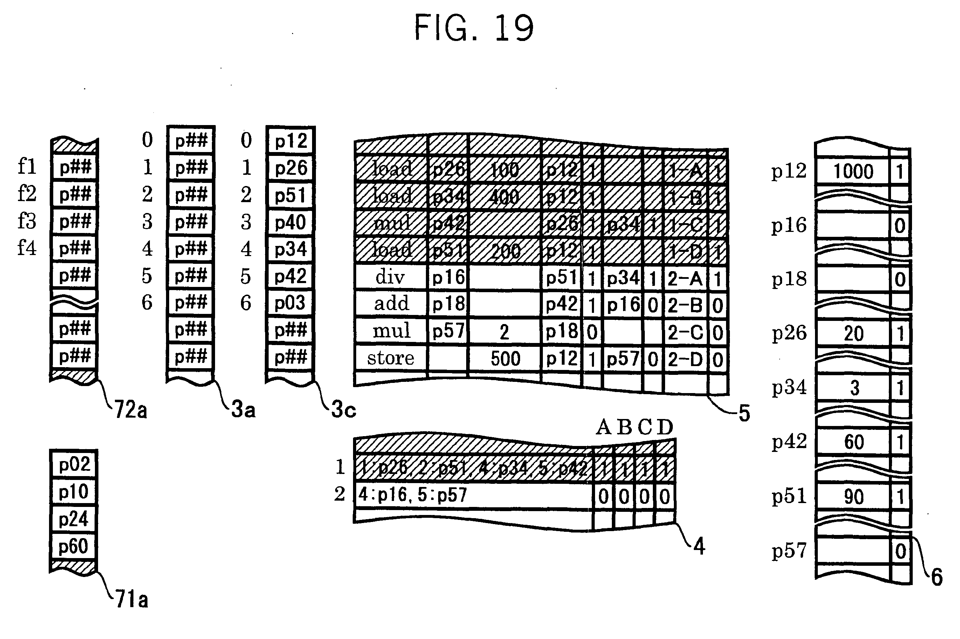

Besides, in accordance with completion of Instruction_1, each address of DF entry to be deallocated is registered on the FL. In this case, p02, p10, p24 and p60 ― which are pre-alteration contents of the CMF entries of address 1, 2, 4 and 5 ― are entered into the entry buffer for instruction completion (EBIC) 71a, which is a component of the FL. (In this case, there is no DF-entry address which is a destination-field content in the OQ entries that have held the operations contained in Instruction_1, and which is not being entered into the CMF.) Thus, the computer system gets to be in such a state as shown in Fig. 19.

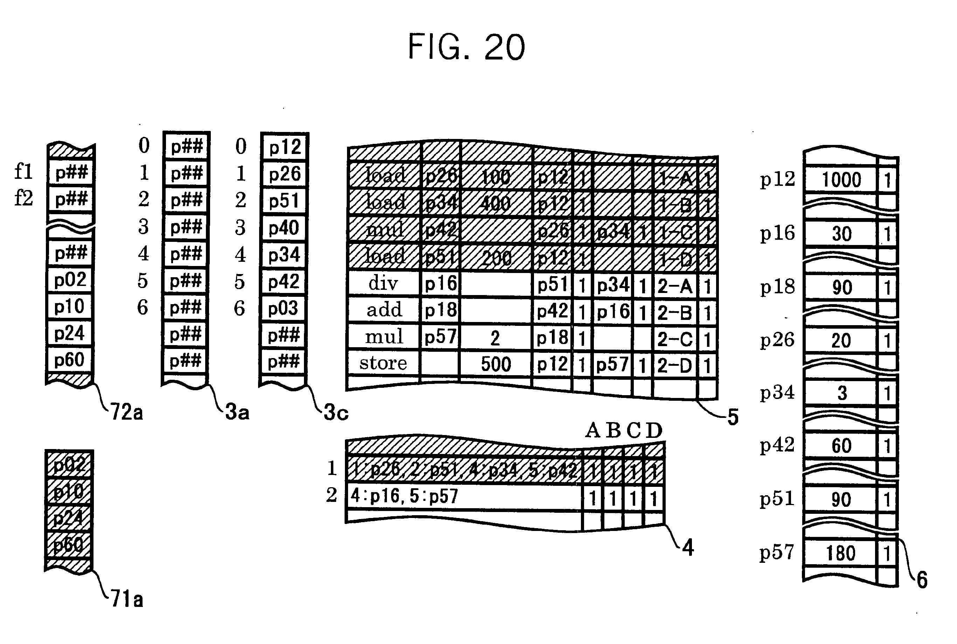

Fig. 20 shows the state that the computer system is in - after some further cycles have gone by - when three operations contained in Instruction_2 have been terminated normally and the store data and the store address have been both arranged for the last (store) operation. Into the AQD, p02, p10, p24 and p60, which were entered into the EBIC, are moved.

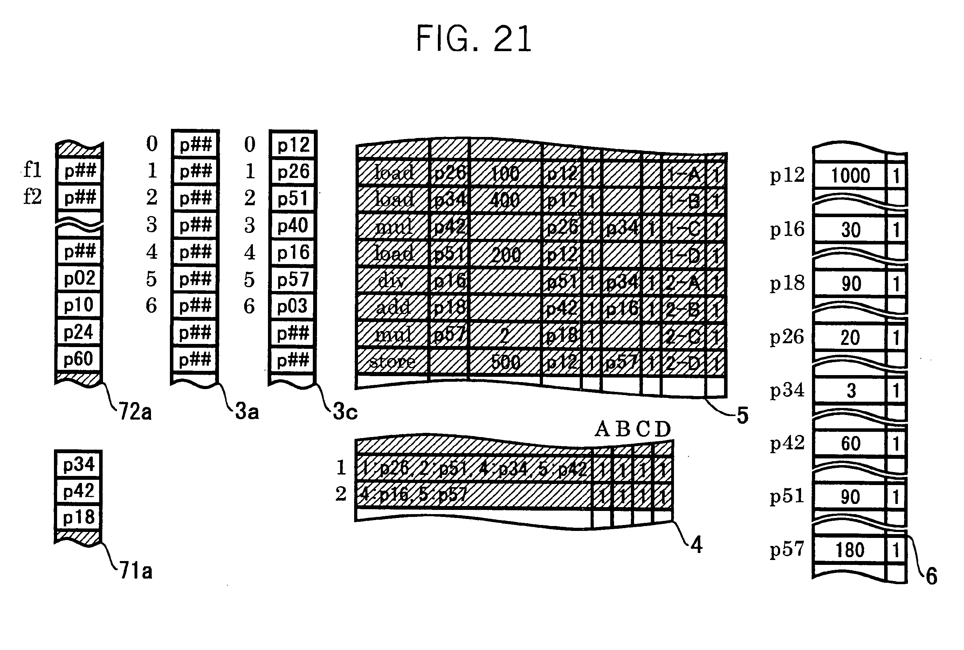

The system at the point of Fig. 20 is to complete Instruction_2 in a cycle in the same manner as in the case of Instruction_1. In this case, Instruction_2 contains a store operation, so the system requests the LSU to carry out the store. Besides, in accordance with completion of the instruction, each address of DF entry to be deallocated is registered on the FL. In this case, P34 and p42 ― each of which is pre-alteration CMF-entry content being altered ―, and p18 ― which is a destination-field content in the OQ entries that have held the operations contained in Instruction_2, and which is not being entered into the CMF ― are entered into the EBIC. Thus, the computer system gets to be in such a state as shown in Fig. 21.

Now, computation of Y=(A*X+B/X)*2 is concluded in the computer system of this embodiment:

### (5) Exception Recovery

Here, exception recovery in the computer system of the present invention is described.

In the case where an exception occurs in executing an operation, the state that the computer system was in when the instruction containing the operation was issued needs to be recovered. (In the stack mode, however, spill/fill operations already performed between the data file (DF) and the data buffer are not to be undone.)

For this, the system cancels all the instructions issued after the one causing the exception, copies the contents of the completed mapping file (CMF) (and its bottom pointer Bc) at this point into the advanced mapping file (AMF) (and its bottom pointer Ba), and makes modifications on the AMF (and Ba) according with the substances of the state-modification-queue (SMQ) entries from the head one to the one corresponding to the instruction causing the exception.

To cancel all the instructions issued after a certain one, the system eliminates all the entries in the range that corresponds to the instructions to be canceled from the queue both on the operation queue (OQ) and on the SMQ, and puts addresses of DF entries allocated as destination registers in the operations to be canceled back into the FL.

There are basically two methods of putting addresses of DF entries allocated as destination registers in the operations to be canceled back into the FL: the method in which DF-entry addresses are outright entered into the entry buffer for instruction completion (EBIC) successively, and the method in which the pointer to the head of the allocation queue for destinations (AQD) is altered. In the case where the latter method is adopted, you need to keep values, each of which may be entered into the pointer to the head of the AQD, somewhere. For this, there may be ways such as (a) providing, for each SMQ entry, a field into which a value is to be entered when a corresponding instruction is issued, and (b) providing a kind of history file into which a value is to be entered each time an instruction containing a conditional branch operation is issued.

As above, as being able to substantially recover the state of the AMF (and Ba) at each point when an instruction causing an exception was issued, the computer system of the present invention can precisely handle exceptions.

### (6) Other Embodiments

Every computer system according to the present invention is not necessarily identical to the above-mentioned embodiment. There may be various embodiments with different detailed structures. For example, the following can be listed.

### (6-1) Embodiment A

A computer system according to the present invention can be so structured that, with a program that is conformed to the instruction format for a traditional stack-based/register-based processor stored in the instruction cache, the program is to be so transformed as to conform to the instruction format prescribed in section (2) on the fly right before the instruction-issue stage.

### (6-2) Embodiment B

A computer system according to the present invention can be so structured that, in the course of issue of each instruction, addresses of DF entries to be deallocated when the instruction is completed or pieces of information for identifying them are entered in the state-modification queue or a specialized queue in advance.

### (6-3) Embodiment C

Such a computer system can be incarnated, as to be furnished with an advanced and a completed stack-type mapping file each having a bottom pointer, and an advanced and a completed register-type mapping file, wherein both a modification on stack-type mapping file and that on register-type mapping file can be indicated in the state-modification field of an instruction.

### (6-4) Embodiment D

Many of the variations such as those conceivable for the register-based superscalar architecture can be applied to the computer system based on the present invention. For example, the following can be listed.
1. A system implementing the operation window by providing a reservation station at the input of each functional unit.
2. A system having a scheduler behind the operation queue.
3. A system having a data file, an operation queue, functional units, and a free list for each data type: integer / floating-point, general-purpose /multimedia or the like.
4. A system that has a plurality of sets each comprising an advanced mapping file, a completed mapping file, an operation queue, a state-modification queue, etc., and that is so structured as to be able to process a plurality of threads in parallel.

### INDUSTRIAL UTILITY

According to the present invention, high-performance computer systems can be materialized. Besides, programs described in any machine language for traditional stack-based/register-based processors can be so transformed as to conform to the instruction format for the computer system of the present invention without difficulty.

## Claims

1. A computer system comprising:
a data file that has entries each designed to be able to hold data;
an advanced mapping file that has entries each designed to be able to hold an entry address in said data file;
a completed mapping file that has entries each designed to be able to hold an entry address in said data file;
a state-modification queue that has entries each designed to be able to hold substance of a modification made on said advanced mapping file;
means for holding statuses of operations provided in respective correspondence with said entries of said state-modification queue;and
a means for performing issued operations out of order;
wherein making a modification on said advanced mapping file, entering the substance of said modification into said state-modification queue, and issuing operations combined with said modification on said advanced mapping file are each to be done in one cycle;
wherein each issued operation is to be executed out of order, and, on termination of each operation, corresponding part of said means for holding statuses of operations is to be altered accordingly; and
wherein if all of the operations combined with the modification on said advanced mapping file indicated by the substance in the head entry of said state-modification queue are shown to be terminated normally by the corresponding means for holding statuses of operations, a modification according with said substance in said head entry of said state-modification queue is to be made on said completed mapping file, and said head entry of said state-modification queue is to be dequeued.

2. The computer system according to claim 1;
wherein said advanced mapping file and said completed mapping file are each to hold stack elements from the top downward in order of entry address.

3. The computer system according to claim 1;
wherein said advanced mapping file and said completed mapping file are each to be accessed by entry addresses.
